# EUROPÄISCHE PATENTANMELDUNG

(11) **EP 1 550 647 A1**
(43) Veröffentlichungstag der Anmeldung: **06.07.2005**
(21) Anmeldenummer: 04450231.8
(22) Anmeldetag: 16.12.2004
(51) Int. Cl.: C05F 17/00, C05F 17/02, B01D 53/00

(54) **Verfahren zum Belüften eines Rotteprozesses sowie Rottebelüftungseinrichtung zur Durchführung dieses Verfahrens**

(30) Priorität: 19.12.2003 AT 20582003
(71) Anmelder: Harrer, Ewald, 1040 Wien (AT)
(72) Erfinder: Hanke, Reinhart, Dipl.-Ing., 8700 Leoben (AT); Harrer, Ewald, Dipl.-Ing., 1040 Wien (AT)
(74) Vertreter: Haffner, Thomas M., Dr.

(57) **Zusammenfassung**

Bei einem Verfahren zum Belüften eines Rotteprozesses, bei welchem der Rotte Rohluft zugeführt und aus der Rotte Prozessabluft abgezogen wird, werden Teilmengen der Prozessabluft kontinuierlich und weitere Teilmengen der Prozessabluft gesondert und intermittierend abgezogen. Bei der Rottebelüftungseinrichtung mit einem Rottereaktor, einem Gebläse sowie Abluft- und Zuluftleitungen, ist die den Rottereaktor verlassende Abluft an einen ersten Sammler angeschlossen. An den ersten Sammler sind wenigstens zwei gesonderte zweigleitungen für Prozessabluft angeschlossen, und es ist in wenigstens eine Zweigleitung ein Drossel- und/oder Absperrventil bzw. eine Steuerklappe eingebaut.

## Beschreibung

Die Erfindung bezieht sich auf ein Verfahren zum Belüften eines Rotteprozesses, bei welchem der Rotte Rohluft zugeführt und aus der Rotte Prozessabluft abgezogen wird sowie auf eine Rottebelüftungseinrichtung mit einem Rottereaktor, einem Gebläse sowie Abluft- und Zuluftleitungen.

Für die Aufarbeitung von festen Abfallstoffen sind aerobe Rotteprozesse bekannt geworden, welche häufig in geschlossenen Reaktoren oder geschlossenen Hallen durchgeführt werden. Aerobe Rotteprozesse benötigen eine entsprechende Sauerstoffzufuhr und es wird daher zumeist eine maschinelle Belüftung eingesetzt, welche sowohl als drückende als auch als saugende Belüftung ausgeführt sein kann. Das Verfahren selbst ist einer Reihe von saisonspezifischen Bedingungen unterworfen, wobei die Qualität des Einsatzmateriales großen Schwankungen unterliegen kann. Auch legistische Vorgaben für die Produktqualität sind bei der Durchführung des Rotteprozesses zu berücksichtigen. Auf Grund der teilweise einander widersprechenden Vorgaben, wie sie sich entweder aus der unterschiedlichen Qualität des Einsatzmateriales und/oder legistischen Vorgaben ergeben, gestaltet sich die Regelung eines Rottebelüftungsprozesses überaus aufwendig und es wäre wünschenswert einen Standardprozess zu schaffen, mit welchem mit einer beschränkten Anzahl von Regelmaßnahmen den jeweiligen Auflagen oder Qualitätsunterschieden Rechnung getragen werden kann. Insbesondere kann es bei bestimmten Einsatzmaterialen erforderlich sein eine Hygienisierung des Rottegutes durch entsprechend höhere Prozesstemperaturen zu gewährleisten und es kann im Zuge legistischer Auflagen der Fall eintreten, dass die primären Steuerungsmaßnahmen weniger auf eine gleich bleibende Qualität des Endproduktes als auf die Einhaltung entsprechender Abluft- oder Umweltbestimmungen gerichtet sind.

Die Erfindung zielt nun darauf ab, ein Verfahren und eine Einrichtung der eingangs genannten Art zu schaffen, welche eine standardisierte Prozessführung ermöglicht, um unter Verwendung unterschiedlichster Maßnahmen für die Abluftbehandlung ohne die Gefahr einer Übersteuerung oder Überregelung definierte Zielvorgaben leichter zu erreichen.

Zur Lösung dieser Aufgabe besteht das erfindungsgemäße Verfahren im wesentlichen darin, dass Teilmengen der Prozessabluft kontinuierlich und weitere Teilmengen der Prozessabluft gesondert und intermittierend abgezogen werden. Dadurch, dass die primäre Prozessabluft in wenigstens zwei Stränge aufgeteilt wird, über welche jeweils Teilmengen des Prozessabgases abgezogen werden können, wird es möglich einen Teilstrang, der beispielsweise weniger als die Hälfte der gesamten durchschnittlich erforderlichen Prozessabluft führt, kontinuierlich abzuführen und beispielsweise einer entsprechenden kontinuierlichen Abluftbehandlung zuzuführen. Der jeweilige Anteil der kontinuierlich abgeführten Prozessluft kann durch ein entsprechendes Drosselorgan eingestellt werden und der jeweils geeigneten Abluftbehandlung unterworfen werden. Der zweite Teilstrang, über welchen die Prozessabluft beispielsweise intermittierend abgeführt werden kann, erlaubt den Belüftungsrhythmus den Erfordernissen besser anzupassen, ohne dass es zu großen Amplituden der Belüftungsintensität und damit zu einer Übersteuerung kommt. Mit Vorteil wird das Verfahren hierzu so geführt, dass Teilmengen der Prozessabluft für die Steuerung der Belüftungsintensität und weitere Teilmengen der Prozessabluft für kontinuierliche Abgasbehandlungsschritte, wie z.B. einer Verbrennung, gesondert abgezogen werden. Die Prozesskühlung gelingt mit derartigen Teilströmen, und insbesondere intermittierenden Teilströmen, auf eine wesentlich besser kontrollierte Weise und es werden jeweils abhängig von den übrigen Bauteilen der Anlage optimale Nutzungen dieser Anlagenbauteile gewährleistet. Beispielsweise kann ein Teilstrom der Prozessabluft in Behandlungsverfahren eingesetzt werden die einen sehr gleichförmigen Abluftstrom erfordern, wie beispielsweise zum Betrieb von Wärmepumpen oder einer Abluftverbrennung. Eine intermittierende Belüftung kann zur Vermeidung von "Kaminbildungen" im Rottekörper, wie sie durch stationäre Strömungsverhältnisse ausgelöst werden kann, eingesetzt werden und erleichtert die bessere Sicherung der Wasserdampfsättigung der Prozessluft. Mit einer intermittierenden Belüftung kann somit ein gleichmäßigerer Effekt bei der Nachfeuchtung des Rottegutes erzielt werden, ohne dass Druckverminderungen bei der Drosselung der Belüftungsintensität befürchtet werden müssen.

Wesentlich für einen derartigen Standardprozess ist hiebei vor allem die Versorgung mit standardisierter Rohluft die in annähernd wasserdampfgesättigtem Zustand mit einer entsprechend vorgegebenen Temperatur, beispielsweise zwischen 25 und 35°C, eingesetzt werden kann. Die Luftkonditionierung kann wiederum beispielsweise in kontinuierlich betriebenen Einrichtungen durch Erwärmen und Befeuchten von Frischluft oder durch Mischen von Frischluft mit gegebenenfalls gekühlter Prozessluft erfolgen. Bei erhöhtem Dampfdruck in der Rohluft kann insbesondere zum Zwecke der Hygienisierung auch bei höheren Prozesstemperaturen gearbeitet werden, wobei im Bereich des Eintrittes der Prozessrohluft in den Rottekörper Abtrocknungen und eine unerwünschte Abkühlung des Rottegutes vermieden werden kann.

Die Trennung der Abluftstränge erlaubt es somit den jeweils für die Abluftbehandlung eingesetzten Komponenten der Anlage in besonders günstiger Weise Rechnung zu tragen und es können insbesondere Wäscher, Kühler mit Abwärmenutzung, Biofilter, Abluftverbrennungen und/oder Kondensatbehandlungen und -verwertungen eingesetzt werden. Insbesondere bei Verwendung von Abluftverbrennungseinrichtungen kann eine sinnvolle Betriebsweise in erster Linie bei kontinuierlicher Zufuhr von Abluft mit großen Frachten organischer Belastung gewährleistet werden.

In vorteilhafter Weise wird im Rahmen des erfindungsgemäßen Verfahrens so vorgegangen, dass eine Teilmenge der Prozessabluft einem Mischer für die Zufuhr von Frischluft zugeführt wird, wobei vorzugsweise eine Teilmenge der Prozessabluft über einen Kühler, insbesondere einen Gaswäscher, geführt ist. Für die Regelung der Rottetemperatur wird mit Vorteil so vorgegangen, dass eine intermittierend abgezogene Teilmenge der Prozessabluft zur Regelung der Rottetemperatur eingesetzt wird. Insgesamt ergibt sich somit mit einer Reihe von besonders einfachen Regelungsmaßnahmen, welche im Wesentlichen lediglich die Steuerung einer Steuerklappe zum Zwecke der Abzweigung der entsprechenden Teilmengen umfasst, den unterschiedlichsten Bedürfnissen einer Rottebelüftung Rechnung zu tragen.

Die erfindungsgemäße Rottebelüftungseinrichtung ist hiebei im Wesentlichen dadurch gekennzeichnet, dass die den Rottereaktor verlassende Abluft an einen ersten Sammler angeschlossen ist, dass an den ersten Sammler wenigstens zwei gesonderte Zweigleitungen für Prozessabluft angeschlossen sind und dass in wenigstens eine Zweigleitung ein Drosselund/oder Absperrventil bzw. eine Steuerklappe eingebaut ist. Das Drossel- und/oder Absperrventil kann hiebei als Klappenventil ausgebildet sein, wobei eine derartige Steuerklappe beispielsweise von den üblicher Weise bereitstehenden Messdaten für Druck, Temperatur und Feuchtigkeit betätigt werden kann, um den Rohluftverbrauch auf anlagenspezifische und gegebenenfalls saisonspezifische Bedingungen, wie die Qualität des Einsatzmateriales, einzustellen. Mit Vorteil sind hierbei das oder die Drossel- und/oder Absperrventil(e) intermittierend betätigbar ausgebildet.
Systeme zur Steuerung von Rotteprozessen, bei denen in vorgegebenen Zeitintervallen aus Messwerten der Prozessluft vor und nach dem Durchgang durch das Rottegut sowie der Prozessluftmenge Daten der Stoff- und Wärmbilanz des Prozesses berechnet wurden, sind bekannt. Die Entwicklung der Rottetechnik ist aber in jüngster Zeit einer Reihe von restriktiven verfahrenstechnischen Randbedingungen unterworfen worden, welche insbesondere die Anforderungen an die Qualität des Einsatzmateriales betreffen. Die getrennte Sammlung und mechanische Aufbereitung führt zu Ausgangsprodukten, für welche Anlagen nicht notwendiger Weise ursprünglich ausgelegt waren. Analoges gilt für die Vorschriften betreffend Prozesstemperaturen, insbesondere für die Hygienisierung des Rottegutes, und die Prozessführung in geschlossenen Reaktoren oder Hallen, wobei auch Vorschriften betreffend die Behandlungsdauer in einzelnen Prozessabschnitten und bestimmte Anforderungen an Zwischenprodukte, wie z.B. die Atmungsaktivität am Ende der sogenannten Intensivrotte, sowie die Beschränkung des Prozessluftverbrauches zu berücksichtigen sind. Ein zumindest anlagenspezifisch standardisierter Rotteprozess kann hiebei teilweise auf die ursprünglichen Ziele der Kompostherstellung verzichten, um den jeweils unterschiedlichen Anforderungen formal zu entsprechen. Die Bereitstellung standardisierter Prozessluft bzw. Rohluft ist mit der Aufteilung auf eine Mehrzahl von Teilsträngen wesentlich einfacher zu realisieren.

Die Erfindung wird nachfolgend anhand von in der Zeichnung schematisch dargestellten Ausführungsbeispielen näher erläutert. In dieser zeigen Fig.1 eine Ausbildung für saugende Belüftung unter Verwendung von zwei gesonderten Abluftströmen und Fig.2 eine abgewandelte schematische Ausbildung, bei welcher konditionierte Prozessrohluft durch Zumischen von ungekühlter oder gekühlter Prozessabluft bzw. -umluft zu Frischluft erzielt wird.

In Fig.1 ist ein Rottereaktor mit 1 bezeichnet, in welchen eine Befeuchtungseinrichtung 2 mündet. Durch den Rottereaktor wird über eine Sammelleitung 3 Prozessabluft abgesaugt und einem Chargensammler 4 für primäre Abluft zugeführt. An dieser Stelle werden verschiedene Messwerte, wie insbesondere Temperaturmesswerte, gewonnen. Über eine Steuerklappe 5 wird die Prozessabluft in die zwei Teilstränge 6 und 7 unterteilt, wobei aus den jeweiligen Sammelleitungen 8 und 9 kontinuierlich oder intermittierend Abluft einer Abluftbehandlung 10 zugeführt wird. Überschüssig behandelte und damit gereinigte Abluft wird über die Leitung 11 abgezogen, wobei die Abluftbehandlung der Rückgewinnung von Abwärme über die Leitung 12 und der Ableitung von Kondensat über die Leitung 13 dient. Bei dieser Ausbildung wird über die Leitung 14 dem Reaktor wiederum Frischluft zugeführt.

Bei der Ausbildung nach Fig.2 sind die Bezugszeichen der Fig.1 beibehalten worden, wobei nunmehr die Leitung 14 mit konditionierter Abluft gespeist wird. Zu diesem Zwecke mündet an die Abluftbehandlungseinrichtung 10 eine Frischluftleitung 15, über welche Frischluft mit der intermittierend oder kontinuierlich abgeführten Prozessabluft aus den Leitungen bzw. Sammlern 8 und 9 zugemischt wird. Die entsprechend konditionierte Rohluft gelangt über den Sammler 16 in die Leitung 14 und wird somit zum Großteil im Kreislauf geführt und dem Reaktor 1 wiederum rückgeführt.

## Patentansprüche

1. Verfahren zum Belüften eines Rotteprozesses, bei welchem der Rotte Rohluft zugeführt und aus der Rotte Prozessabluft abgezogen wird, **dadurch gekennzeichnet, dass** Teilmengen der Prozessabluft kontinuierlich und weitere Teilmengen der Prozessabluft gesondert und intermittierend abgezogen werden.

2. Verfahren nach Anspruch 1, **dadurch gekennzeichnet, dass** Teilmengen der Prozessabluft für die Steuerung der Belüftungsintensität und weitere Teilmengen der Prozessabluft für kontinuierliche Abgasbehandlungsschritte, wie z.B. einer Verbrennung, gesondert abgezogen werden.

3. Verfahren nach Anspruch 1 oder 2, **dadurch gekennzeichnet, dass** eine Teilmenge der Prozessabluft einem Mischer für die Zufuhr von Frischluft zugeführt wird.

4. Verfahren nach Anspruch 1, 2 oder 3, **dadurch gekennzeichnet, dass** eine Teilmenge der Prozessabluft über einen Kühler, insbesondere einen Gaswäscher, geführt ist.

5. Verfahren nach einem der Ansprüche 1 bis 4, **dadurch gekennzeichnet, dass** eine intermittierend abgezogene Teilmenge der Prozessabluft zur Regelung der Rottetemperatur eingesetzt wird.

6. Rottebelüftungseinrichtüng mit einem Rottereaktor, einem Gebläse sowie Abluft- und Zuluftleitungen, **dadurch gekennzeichnet, dass** die den Rottereaktor verlassende Abluft an einen ersten Sammler angeschlossen ist, dass an den ersten Sammler wenigstens zwei gesonderte Zweigleitungen für Prozessabluft angeschlossen sind und dass in wenigstens eine Zweigleitung ein Drossel- und/oder Absperrventil bzw. eine Steuerklappe eingebaut ist.

7. Rottebelüftungseinrichtung nach Anspruch 6, **dadurch gekennzeichnet, dass** wenigstens eine Prozessabluftleitung an eine Abluftbehandlungseinrichtung angeschlossen ist, in welcher die Abluft gekühlt und gegebenenfalls mit Frischluft versetzt wird, und dass auf die Abluftbehandlungseinrichtung eine Rezirkulationsleitung für die behandelte Abluft und/oder Frischluft zum Rottereaktor angeschlossen ist.

8. Rottebelüftungseinrichtung nach einem der Ansprüche 6 oder 7, **dadurch gekennzeichnet, dass** das oder die Drosselund/oder Absperrventil(e) intermittierend betätigbar ausgebildet sind.
